Europäisches Patentamt

European Patent Office

Office européen des brevets

(19)

(11) Veröffentlichungsnummer : **0 171 849**
**B1**

(12) **EUROPÄISCHE PATENTSCHRIFT**

(45) Veröffentlichungstag der Patentschrift :
26.04.89

(21) Anmeldenummer : 85201208.7

(22) Anmeldetag : 19.07.85

(51) Int. Cl.⁴ : **A 22 C 11/02**

(54) Verfahren und Vorrichtung zum Füllen einer von einem Füllrohr ablaufenden während des Füllvorgangs abgebremsten Verpackungshülle.

(30) Priorität : 27.07.84 DE 3427738

(43) Veröffentlichungstag der Anmeldung :
19.02.86 Patentblatt 86/08

(45) Bekanntmachung des Hinweises auf die Patenterteilung : 26.04.89 Patentblatt 89/17

(84) Benannte Vertragsstaaten :
AT BE CH DE FR GB IT LI NL SE

(56) Entgegenhaltungen :
DE–A– 2 018 454
DE–A– 2 137 449
DE–B– 1 187 150
DE–B– 1 290 070
DE–B– 2 645 714

(73) Patentinhaber : Niedecker, Herbert, Dipl.-Ing.
Am Ellerhang 6
D-6240 Königstein 2 (DE)

(72) Erfinder : Niedecker, Herbert, Dipl.-Ing.
Am Ellerhang 6
D-6240 Königstein 2 (DE)

(74) Vertreter : Fischer, Ernst, Dr.
Neumannstrasse 88
D-6000 Frankfurt am Main 50 (DE)

EP 0 171 849 B1

## Beschreibung

Die Erfindung betrifft ein Verfahren zum Füllen einer von einem Füllrohr ablaufenden während des Füllvorgangs durch zwei Bremselemente abgebremsten Verpackungshülle mit pastösem Füllgut, wobei ein Bremselement mit konstanter Bremskraft die Verpackungshülle nach Abschluß des Füllvorgangs während des Einschnür- und Verschließvorgangs allein auf dem Füllrohrende hält und das zweite in seiner Bremskraft verstellbare Bremselement nur während des Füllvorgangs mit der erforderlichen Bremskraft zugeschaltet ist und eine Vorrichtung zum Durchführen dieses Verfahrens.

Es ist bekannt, beim Füllen von Verpackungshüllen mit z. B. Wurstmasse durch ein Füllrohr die auf das Füllrohr aufgezogene Verpackungshülle oder den Darm beim Abziehen und Füllen durch ein Bremselement mit einer Bremslippe, einer sogenannten Darmbremse, so zu bremsen, daß die Verpackungshülle die gewünschte pralle Füllung erhält. Die Darmbremse kann dabei von Hand in ihrer Bremskraft so eingestellt werden, wie es nach dem verwendeten Füllgut und Verpackungsmaterial zweckmäßig ist.

Dazu ist es bekannt, daß zur Vermeidung von Beschädigungen der Verpackungshülle durch die Verdrängerscheren die Bremskraft vor dem Verschließen der gefüllten Verpackungshülle verringert wird. Dies kann u. a. in der Weise geschehen, daß ein Bremselement mit starker Bremskraft, das nur während des Füllvorgangs zugeschaltet ist, die erforderliche Bremskraft ausübt und eine zusätzliche in Richtung Füllrohranfang angebrachte Darmbremse mit so geringer Bremskraft, daß das Eindringen von Luft und Flüssigkeit in die Verpackungshülle verhindert wird, nach Abschluß des Füllvorgangs die Verpackungshülle allein hält, um Beschädigungen der Verpackungshülle durch die Verdrängerscheren zu vermeiden (DE-OS 20 18 454). Diese Einrichtung ist ihrem Wesen nach für die Herstellung von Portionswürsten mit einem Durchmesser bis zu etwa 65 mm und einem Gewicht bis zu etwa 2 kg bestimmt, für die die Bremskraft eines Bremselements mit starker Bremskraft ausreicht, um die während des Füllvorgangs erforderliche Bremskraft zu erzeugen, während der schwache Bremsring nur eine Haltefunktion während des Einschnür- und Verschließvorgangs hat.

Neuerdings werden derartige kombinierte Füll- und Verschließvorrichtungen auch für großkalibrige Verpackungshüllen mit einem Durchmesser von 90 bis 200 mm und einem Füllgewicht von 5 bis 30 kg verwandt. Dabei ist es erforderlich, eine pralle kalibergenaue Füllung herbeizuführen. Hierfür ist die bekannte Vorrichtung aus verschiedenen Gründen ungeeignet. Wenn nämlich die Bremskraft während des Füllvorgangs nur durch ein Bremselement ausgeübt wird, besteht die Gefahr, daß die Verpackungshülle infolge der Falten, die bei großkalibrigen Verpackungshüllen am Bremselement gebildet werden, in Verbindung mit dem starken Fülldruck reißt. Außerdem darf, insbesondere bei gekühltem Rohwurstbrät die Bremskraft bei Beginn des Füllvorgangs nicht so groß wie während des Füllvorgangs sein, weil der starke Fülldruck den vorderen Verschluß der Verpackungshülle sprengen kann. Schließlich ist die bekannte Anordnung der beiden Bremselemente für solche großkalibrigen Verpackungshüllen unzweckmäßig, weil beim Verschließen der Verpackungshülle ein verhältnismäßig langer Zipfel zurückbleibt, der bei Massenproduktion zu unerwünschtem Verbrauch von Hüllenmaterial führt.

Es besteht daher das Bedürfnis, daß die Bremskraft zu Beginn des Füllvorgangs so gering ist, daß die Verpackungshülle nicht durch den beginnenden Ausstoß des Füllgutes beschädigt wird oder der bereits angebrachte Verschluß nicht auf dem Zipfel verschoben und dabei aufgebogen wird. Andererseits soll aber während des weiteren Füllvorgangs eine höhere Bremskraft ausgeübt werden, und zwar in der Höhe, die jeweils erforderlich ist, um den gewünschten Durchmesser der Verpackungshülle, insbesondere das gewünschte über die gesamte Wurstlänge gleiche Kaliber zu erreichen, dabei aber die Gefahr einer Beschädigung infolge der Faltenbildung an der Darmbremse vermeidet. Am Ende des Füllvorgangs soll die Bremskraft aber in bekannter Weise so verringert werden, daß die Verdrängerscheren die Verpackungshülle so leicht abziehen können, daß sie während des Verschließvorgangs nicht beschädigt wird.

Aufgabe der Erfindung ist es daher, eine Lösung für die gewünschte verschiedene Einstellung der Bremskraft am Anfang, während und am Ende des Füllvorgangs zu finden und den Zipfel hinter dem Verschluß so klein wie möglich zu halten. Die Lösung der Aufgabe besteht darin, daß bei einem Verfahren der eingangs beschriebenen Art erfindungsgemäß das Bremselement mit konstanter Bremskraft unmittelbar am Füllrohrende und das während des Füllvorgangs zugeschaltete zweite in seiner Bremskraft verstellbare Bremselement näher zum Füllrohranfang angeordnet ist, und daß das Bremselement mit konstanter Bremskraft bei Beginn des Füllvorgangs die Verpackungshülle allein abbremst und während des übrigen Füllvorgangs einen wesentlichen Teil, jedoch nicht mehr als die Hälfte der erforderlichen Gesamtbremskraft übernimmt. Am Ende des Füllvorgangs wird die Bremskraft des verstellbaren Bremselements zurückgenommen, so daß die Verpackungshülle nur durch den Bremsring mit konstanter Bremskraft auf dem Füllrohr gehalten und von den Verdrängerscheren ohne Gefahr ihrer Beschädigung vom Füllrohr abgezogen und anschließend verschlossen werden kann.

Die Einstellung der Bremskraft der beiden Bremselemente erfolgt zweckmäßigerweise für das Bremselement mit verstellbarer Bremskraft mit einem Druckmedium, während das Bremselement mit konstanter Bremskraft mechanisch auf die gewünschte Grundbremsung, aber für verschiedene Verpackungshüllen und Füllgüter variabel einstellbar ist.

Die Vorrichtung zur Durchführung des erfindungsgemäßen Verfahrens enthält die geschilderten beiden Bremselemente, von denen das in Füllrichtung vordere während des Füllvorgangs konstant eingestellt ist, während das hintere während des Füllvorgangs in seiner Bremskraft verstellbar ist. Diese Einstellung der Bremskraft dieses Bremselementes während des Füllvorgangs erfolgt zweckmäßigerweise durch einen Schaltzylinder. Die Veränderung der Bremskraft des verstellbaren Bremselementes kann sowohl durch Verstellung des Ausstellwinkel der Bremslippen erfolgen als auch durch Veränderung des Mediendrucks in einem oder mehreren hohlen Bremsringen.

Die Erfindung wird nachstehend anhand der Zeichnungen näher erläutert :

Fig. 1 zeigt die erfindungsgemäße Darmbremsvorrichtung, wobei das Bremselement mit verstellbarer Bremskraft bei Beginn des Füllvorgangs von der Bremskraft entlastet ist ;

Fig. 2 zeigt die Darmbremsvorrichtung, bei der während des weiteren Füllvorgangs dieses Bremselement die gewünschte Bremskraft ausübt ;

Fig. 3 zeigt eine Darmbremsvorrichtung mit einem hohlen Bremsring für das Bremselement mit verstellbarer Bremskraft vor der Druckbeaufschlagung ;

Fig. 4 zeigt die gleiche Darmbremsvorrichtung nach der Druckbeaufschlagung.

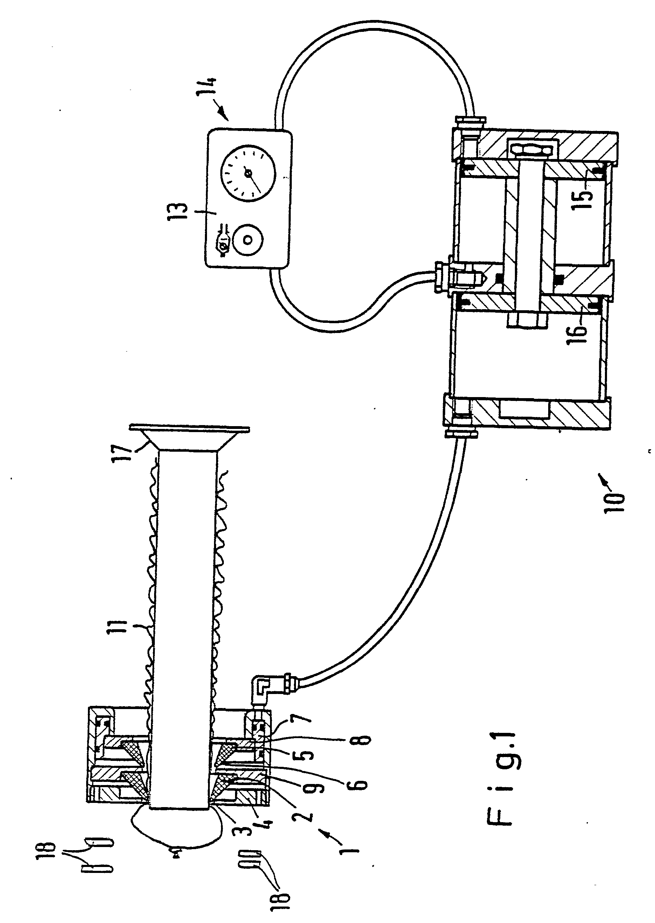

Fig. 1 zeigt eine Darmbremsvorrichtung 1, bei der der in Füllrichtung vordere Bremsring 2, dessen Bremslippe 3 die Bremskraft ausübt, durch einen Andrückring 4 mechanisch auf die gewünschte Grundbremsung eingestellt ist. Der hintere Bremsring 5 mit Bremslippe 6 kann durch den mit einem Druckmedium beaufschlagte Kolben 7 über den Druckring 8 gegen den Stützring 9 gepreßt werden. Die Druckluft wird indirekt durch den Schaltzylinder 10 aufgebracht. Die Bremslippe 6 des Bremsrings 5 übt bei Beginn des Füllvorgangs keine Bremskraft auf die Verpackungshülle 11 aus.

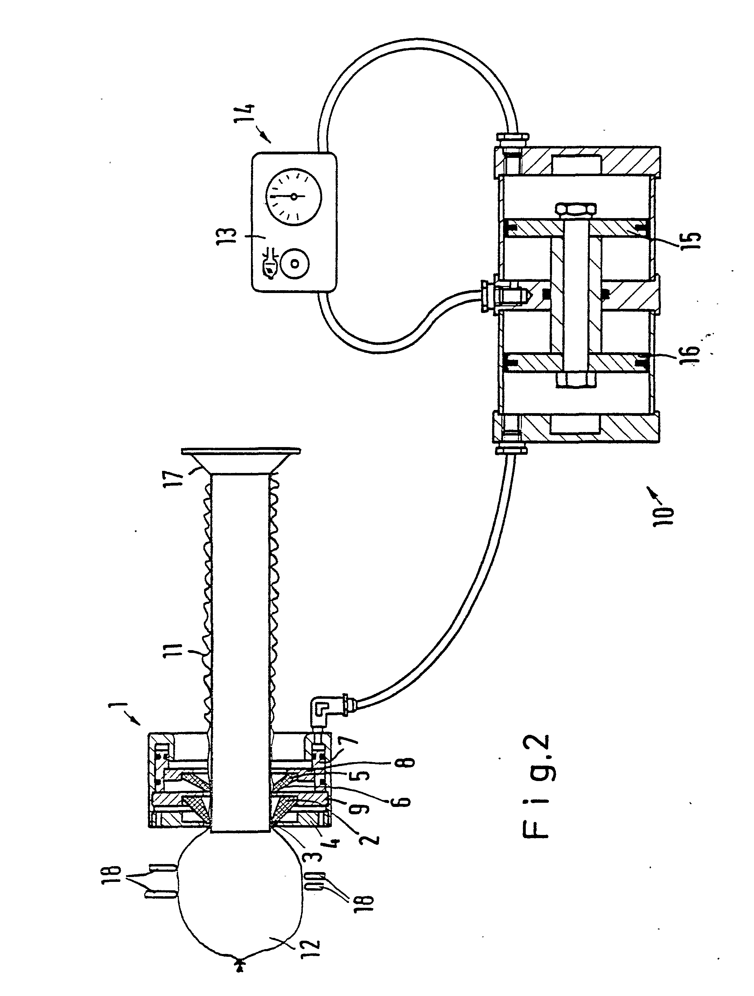

Fig. 2 zeigt die Darmbremsvorrichtung 1, bei der auch der hintere Bremsring 5 durch Veränderung des Anstellwinkels der Bremslippe 6 die notwendige zusätzliche Bremskraft auf den Verpackungsschlauch 11 ausübt, die erforderlich ist, um die gewünschte pralle und kalibergenaue Wurst 12 herstellen zu können. Mit dem Druckminderventil 13 kann der Druck aus der Zentralluftleitung auf die gewünschte Stärke eingestellt und über eine Steuereinheit 14 dem Kolben 15 zugeführt werden. Der Kolben 15 bewegt sich nach links. Den gleichen Hub führt auch der Kolben 16 aus. Die vom Kolben 16 komprimierte Luft drückt den Kolben 7 gegen den Druckring 8, wodurch der Bremsring 5 mit seiner Bremslippe 6 gegen das Füllrohr 17 gepreßt wird und dadurch die erforderliche Bremskraft auf den Verpackungsschlauch 11 ausübt.

Am Ende des Füllvorgangs wird durch eine im Druckminderventil 13 befindliche Steuereinheit 14 das Druckmedium auf die Gegenseite des Kolbens 15 gebracht. Gleichzeitig schnellt der Kolben 16 zurück und bildet hinter dem Kolben 7 einen leichten Unterdruck, der bewirkt, daß der Bremsring 5 wieder in seine Ausgangslage entsprechend Fig. 1 gezogen wird, so daß seine Bremslippe 6 keine Bremskraft auf die Verpackungshülle 11 ausübt.

Infolge der Entlastung der Verpackungshülle 11 von dem Druck des Bremsringes 5 können die Verdrängerscheren 18 das benötigte Hüllenmaterial abziehen, ohne daß die Gefahr der Beschädigung wegen zu hoher Rückhaltekraft durch die Darmbremsvorrichtung 1 besteht. Der vordere Bremsring 2 hält mit der eingestellten geringen Bremskraft die Verpackungshülle 11 auf dem Füllrohr 17 ausreichend fest. Dies wäre nicht genügend sicher wiederholbar möglich, wenn lediglich der während des Füllvorgangs verstellbare Bremsring 5 zur Verfügung stünde, da dessen Bremslippe 6 während des Ablaufs der Verpackungshülle 11 den Druckänderungen am Ende des Füllvorgangs nicht schnell und genau genug folgt.

Als ein weiteres Beispiel dieser Darmbremsvorrichtung 1 wäre denkbar, daß beide Bremsringe 2 und 5 getrennt oder zusammen durch ein Medium bewegt werden. Es wäre auch denkbar, den Schaltzylinder 10 mit einer Rückholfeder zu versehen, die bei Druckminderung der Zuluft die Kolben 15, 16 zurückschiebt und dadurch den leichten Unterdruck hinter dem Kolben 7 erzeugt, um den Bremsring 5 zu entlasten.

Ein direkter Anschluß an eine Vakuumleitung ist ebenfalls möglich, aber zu aufwendig.

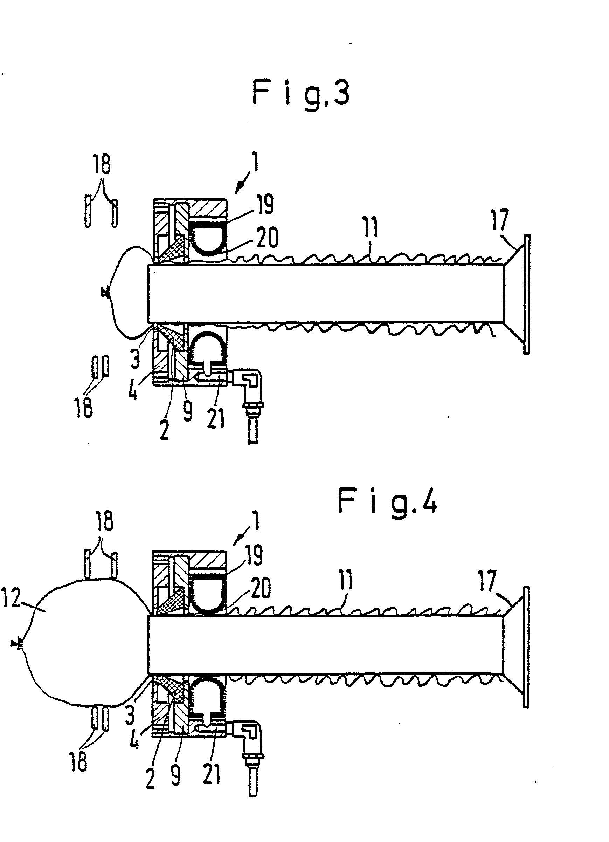

Fig. 3 zeigt eine Darmbremsvorrichtung 1, bei der das Bremselement 2 mit konstanter Bremskraft, wie in Fig. 1 und 2 ausgestaltet ist. Das näher dem Füllrohranfang angeordnete Bremselement mit verstellbarer Bremskraft besteht aus einem hohlen Bremsring 19, dessen Bremsflächen 20 auf die Verpackungshülle 11 keine Bremskraft ausüben. Durch ein Druckmedium, das durch die Bohrungen 21 in die schlauchähnlichen Bremsringe 19 gelangt, werden diese aufgeblasen.

Fig. 4 zeigt die Darmbremsvorrichtung 1, bei der auch der hohle Bremsring 19 mit einem Druckmedium und mit der Bremsfläche 20 die notwendige zusätzliche Bremskraft auf die Verpackungshülle 11 ausübt. Die Bremskraft kann durch Änderung der Spannung des Druckmediums verändert werden. Die Veränderung des Druckes des Druckmediums für den hohlen Bremsring 19 kann wie in Fig. 1 und 2 erfolgen.

## Patentansprüche

1. Verfahren zum Füllen einer von einem Füllrohr ablaufenden, während des Füllvorgangs durch zwei Bremselemente abgebremsten Verpackungshülle mit pastösem Füllgut, wobei ein Bremselement mit konstanter Bremskraft die Verpackungshülle nach Abschluß des Füllvorgangs während des Einschnür- und Verschließvorgangs allein auf dem Füllrohrende hält und das zweite in seiner Bremskraft verstellbare Bremselement nur während des Füllvorgangs mit der erforderlichen Bremskraft zugeschaltet ist, dadurch gekennzeichnet, daß das Bremselement mit konstanter Bremskraft unmittelbar am Füllrohrende und das während des Füllvorgangs zugeschaltete zweite in seiner Bremskraft verstellbare Bremselement näher zum Füllrohranfang angeordnet ist, und daß das Bremselement mit konstanter Bremskraft bei Beginn des Füllvorgangs die Verpackungshülle allein abbremst und während des übrigen Füllvorgangs einen wesentlichen Teil, jedoch nicht mehr als die Hälfte der erforderlichen Gesamtbremskraft übernimmt.

2. Vorrichtung zum Durchführen des Verfahrens nach Anspruch 1, mit einer von einem Füllrohr (17) ablaufenden Verpackungshülle (11) für pastöses Füllgut, welche von einem ersten Bremselement (2, 3) mit einer während des Füllvorgangs konstanten Bremskraft und von einem zweiten Bremselement (5, 6 und 19, 20) mit einer während des Füllvorgangs verstellbaren Bremskraft abzubremsen ist, dadurch gekennzeichnet, daß das erste Bremselement (2, 3) unmittelbar am Füllrohrende, aus welchem das Füllgut austritt, und das zweite Bremselement (5, 6 und 19, 20) näher zum Füllrohranfang angeordnet sind.

3. Vorrichtung nach Anspruch 2, gekennzeichnet durch einen Schaltzylinder (10) zum Einstellen der Bremskraft des verstellbaren Bremselements (5, 6 und 19, 20).

## Claims

1. Method for stuffing with pasty stuffing material an envelope mounted on a stuffing tube and braked during the stuffing by two brake elements, in which one brake element with a constant braking force holds the envelope after completion of stuffing during the constricting- and closing process alone on the end of the stuffing tube, and the second brake element, which is adjustable as regards its braking force, is switched on with the necessary braking force only during the stuffing, characterized in that the brake element with constant braking force is arranged directly at the end of the stuffing tube and the second brake element, which is adjustable as regards its braking force and is switched on during the stuffing, is arranged closer to the start of the stuffing tube, and that the brake element with constant braking force at the beginning of the stuffing brakes the envelope alone and during the remaining stuffing takes over a substantial part, but not more than half, of the necessary total braking force.

2. Device to carry out the method according to Claim 1, with an envelope (11) for pasty stuffing material mounted on a stuffing tube (17), which envelope is to be braked by a first brake element (2, 3) with a braking force which is constant during the stuffing, and by a second brake element (5, 6 and 19, 20) with a braking force which is adjustable during the stuffing, characterized in that the first brake element (2, 3) is arranged directly at the end of the stuffing tube, from which the stuffing material emerges, and the second brake element (5, 6 and 19, 20) is arranged closer to the start of the stuffing tube.

3. Device according to Claim 2, characterized by a control cylinder (10) to set the braking force of the adjustable brake element (5, 6 and 19, 20).

## Revendications

1. Procédé de bourrage d'un produit pâteux dans une enveloppe d'emballage, issue d'un tube de remplissage et freinée par deux éléments de freinage pendant le bourrage, l'un des éléments de freinage maintenant, avec une force de freinage constante, l'enveloppe d'emballage, après la fin du bourrage, pendant l'étranglement et la fermeture, seulement sur l'extrémité du tube de remplissage, et le second élément de freinage, dont la force de freinage est réglable, n'étant branché, avec la force de freinage nécessaire, que pendant le bourrage, caractérisé en ce qu'il consiste à disposer l'élément de freinage, dont la force de freinage est constante, directement à l'extrémité du tube de remplissage et l'élément de freinage, dont la force de freinage est réglable, plus près du début du tube de remplissage, et en ce que l'élément de freinage dont la force de freinage est constante, freine seul l'enveloppe d'emballage au début du bourrage et prend en charge, pendant le reste du bourrage, une partie importante, mais pas plus de la moitié, de toute la force de freinage qui est nécessaire.

2. Dispositif de mise en oeuvre du procédé suivant la revendication 1, comprenant une enveloppe d'emballage (11), issue d'un tube de remplissage (17) et destinée à du produit pâteux, qui doit être freinée par un premier élément de freinage (2, 3) ayant une force de freinage constante pendant tout le bourrage et par un second élément de freinage (5, 6, 19, 20) ayant une force de freinage réglable pendant le bourrage, caractérisé en ce que, le premier élément de freinage (2, 3) est disposé directement à l'extrémité du tube de remplissage par laquelle sort le produit et le second élément de freinage (5, 6 et 19, 20) est disposé plus près du début du tube de remplissage.

3. Dispositif suivant la revendication 2, caractérisé par un vérin de commande (10) pour régler la force de freinage de l'élément de freinage (5, 6 et 19, 20) réglable.

Fig.1

EP 0 171 849 B1

Fig.2

# Fig.3

# Fig.4